# EUROPEAN PATENT SPECIFICATION

(11) **EP 3 937 336 B1**
(45) Date of publication and mention of the grant of the patent: **02.12.2026**
(21) Application number: 20886278.9
(22) Date of filing: 30.10.2020
(51) Int. Cl.: H02J 7/60, H02J 7/62, H02J 7/80, H01M 10/48

(54) **BMS WAKEUP DEVICE AND METHOD**
VORRICHTUNG UND VERFAHREN ZUM AUFWECKEN VON BMS
DISPOSITIF ET PROCÉDÉ DE RÉVEIL DE SYSTÈME DE GESTION DE LA BATTERIE

(30) Priority: 15.11.2019 KR 20190146382
(43) Date of publication of application: 12.01.2022
(73) Proprietor: LG Energy Solution, Ltd., Seoul 07335 (KR)
(72) Inventor: KIM, Jeong Wook, Daejeon 34122 (KR); YOON, Seog Jin, Daejeon 34122 (KR); NOH, Seung Jin, Daejeon 34122 (KR); AN, Hyo Seong, Daejeon 34122 (KR); LEE, Won Hoe, Daejeon 34122 (KR)
(74) Representative: Plasseraud IP
(86) International application number: PCT/KR2020/014978
(87) International publication number: WO 2021/096116

(56) References cited:
- EP-A2- 1 855 368
- WO-A1-2019/078589
- JP-A- 2013 188 088
- KR-A- 20140 025 627
- KR-A- 20180 053 843
- KR-B1- 101 741 643
- US-A- 5 477 130
- US-A1- 2012 286 575
- US-A1- 2018 015 833

## Description

### [Technical Field]

The present invention relates to a device and method for waking up a BMS using the power of a battery itself without applying power from the outside.

### [Background Art]

In recent years, as the demand for portable electronic products such as laptops, video cameras, and portable phones is rapidly increasing, and the development of energy storage batteries, robots, satellites, and the like begins in full swing, research on a high-performance secondary battery capable of repetitive charging and discharging is actively being conducted.

Currently commercialized secondary batteries include nickel cadmium batteries, nickel hydride batteries, nickel zinc batteries, and lithium secondary batteries, and among them, lithium secondary batteries are in the spotlight due to their advantages such as free charging and discharging, a very low self-discharge rate, and high energy density, as a memory effect rarely occurs compared to nickel-based secondary batteries.

Battery packs are used in various fields, and often require large capacity, such as electric powered vehicles or smart grid systems. In order to increase the capacity of the battery pack, there may be a method of increasing the capacity of the secondary battery, that is, the battery cell itself but in this case, the effect of increasing the capacity is not large, and there is a disadvantage in that there is a physical limitation on the size expansion of the secondary battery. Therefore, in general, a battery pack in which a plurality of battery modules are connected in series and in parallel is widely used.

These battery packs often include a battery management system (BMS) that manages battery modules. Furthermore, the BMS monitors the temperature, voltage, and current of the battery module, and controls the balancing operation, cooling operation, charging operation or discharging operation of the battery pack based on the monitored battery module state.

In particular, a large number of battery packs, such as the BMS provided in a 12V lithium battery pack, can operate by receiving power from a battery module included in the battery pack. However, in the case of such a configuration, even if the value is small due to the current consumption of the BMS, there is a problem of consuming power of the battery pack.

In order to solve this problem, a technique has been proposed in which the BMS is not always turned on and is turned on only when its operation is required. However, in this case, when the operation of the BMS is required, for example, a technique for waking up the BMS when connected to an external device is required.

But, in order to apply separate power from the outside, the conventional circuit implementing the BMS wake-up technology has a disadvantage in that complex circuits such as 12V Aux-related circuits, connectors, and charge pumps are used.

Therefore, in the present invention, when the battery is connected to an external device to solve this disadvantage, suggested is a device and method for waking up the BMS with only the power source of the battery.

(Patent Document 0001) Korean Laid-Open Patent Publication No. 10-2019-0051477

Further examples of background art can be found in WO2019/078589A1, EP1855368A2, US2012/286575A1, and US5477130A. In particular, WO2019/078589A1 discloses a battery pack with a battery module having an anode and cathode terminal, a first connector with power terminals connected to both battery terminals and an auxiliary terminal, a resistor grounded at one end and connected to the auxiliary terminal at the other, a switching unit between the cathode and the connector's second power terminal, and a control unit connected to the battery module, switching unit, and resistor. The control unit switches between wake-up and sleep states based on the resistor's voltage .

### [Disclosure]

### [Technical Problem]

The present invention provides a device and method for waking up a BMS only with a power source from a battery when the battery is connected to an external device.

### [Technical Solution]

A battery pack according to an embodiment of the present invention is defined by the independent claim 1, and among others includes a (+) output terminal of the battery pack, a (-) output terminal of the battery pack, a (-) line connecting the (-) output terminal to a (-) terminal of a battery cell constituting the battery pack, a pre-charge FET provided on the (-) line, a system contact terminal configured to check whether the external system is connected, a battery management system (BMS), and a charge/discharge FET configured to charge or discharge the battery pack under a control of the BMS, wherein the pre-charge FET and the charge/discharge FET are connected in parallel.

When the battery pack and the external device are connected, the (+) output terminal of the battery pack and the system contact terminal of the battery pack are electrically connected due to a short member provided in the external device.

When the (+) output terminal and the system contact terminal are connected (shorted) through the short member, the pre-charge FET is turned on, wherein when the pre-charge FET is turned on, a voltage of the battery pack is supplied to the BMS through the (+) output terminal and the pre-charge FET, so that the BMS may wake up.

After the BMS wakes up, the BMS turns off the pre-charge FET.

After the BMS wakes up, the BMS may check voltage, current, and temperature of the battery, and turn on the charge/discharge FET when all of the voltage, current, and temperature are not abnormal.

The external device may be any one of a mobile phone, a tablet computer, a notebook computer, a power tool, a wearable electronic device, and a power storage device, in which the battery pack is mounted.

A method of waking up a battery management system (BMS) of a battery pack according to an embodiment of the present invention is defined by the independent claim 6 and among others includes an external device connection step in which the battery pack is connected to an external device, a system contact terminal connection step in which a (+) terminal of the battery pack and a system contact terminal of the battery pack are connected (shorted) while the battery pack is connected to the external device, a pre-charge FET on step in which the (+) terminal of the battery pack and the system contact terminal are connected in the system contact terminal connection step to turn on a pre-charge FET, and a BMS wake-up step in which when the pre-charge FET of the battery pack is turned on, an output of the battery pack is supplied to the BMS through the pre-charge FET at the (+) terminal to wake up the BMS.

In the system contact terminal connection step, the (+) terminal of the battery pack and the system contact terminal of the battery pack are connected by a short member provided in the external device.

After the BMS wakes up in the BMS wake-up step, the BMS may perform a pre-charge FET off step of turning off the pre-charge FET.

After the BMS wakes up in the BMS wake-up step, the BMS may perform a battery state measurement step of measuring voltage, current, and temperature of the battery pack, so that when the voltage, current, and temperature of the battery pack measured in the battery state measurement step are within a normal range, the charge/discharge FET on step of turning on the charge/discharge FET is performed.

### [Advantageous Effects]

In the present invention, when the battery is connected to an external device, a separate wake-up circuit is not required because the BMS can be wake-up only with the power source of the battery.

In addition, since the present invention does not require a separate wake-up circuit, the utility of the internal space of the battery can be improved.

### [Description of Drawings]

FIG. 1 is a view showing a battery pack according to an embodiment of the present invention.
FIG. 2 is a view showing a battery pack according to another embodiment of the present invention.
FIG. 3 is a flowchart illustrating a BMS wake-up method of a battery pack according to an embodiment of the present invention.

### [Mode for Invention]

Hereinafter, embodiments of the present invention will be described in detail with reference to the accompanying drawings so that those of ordinary skill in the art may easily implement the present invention. However, the present invention may be implemented in various forms and is not limited to the embodiments described herein. In the drawings, parts irrelevant to the description are omitted in order to clearly describe the present invention, and like reference numerals refer to like elements throughout the specification.

Terms including ordinal numbers, such as first and second, may be used to describe various elements, but the elements are not limited by the terms. The above terms are used only to distinguish one component from another. For example, a first component may be referred to as a second component and vice versa without departing from the scope of the present invention. The terms used in the present application are used only to describe specific embodiments, and are not intended to limit the present invention. The terms of a singular form may include plural forms unless otherwise specified.

Throughout the specification, when one part is "connected" to another part, this includes not only "directly connected" cases, but also "electrically connected" cases with other elements therebetween. In addition, when a certain part "includes" a certain component, it means that other components may be further included rather than excluding other components unless otherwise stated. As used throughout the present specification, the term "-ing step" or "a step of -ing" does not mean "a step for -ing".

As for terms used in the present invention, general terms that are currently widely used as possible are selected while considering functions in the present invention, but this may vary depending on the intentions or precedents of those skilled in the art, and the emergence of new technologies. In addition, in certain cases, there are terms arbitrarily selected by the applicant, and in this case, the meaning of the terms will be described in detail in the description of the corresponding invention. Therefore, the terms used in the present invention should be defined based on the meaning of the term and the overall contents of the present invention, not a simple name of the term.
1. Battery pack according to embodiment of present invention.

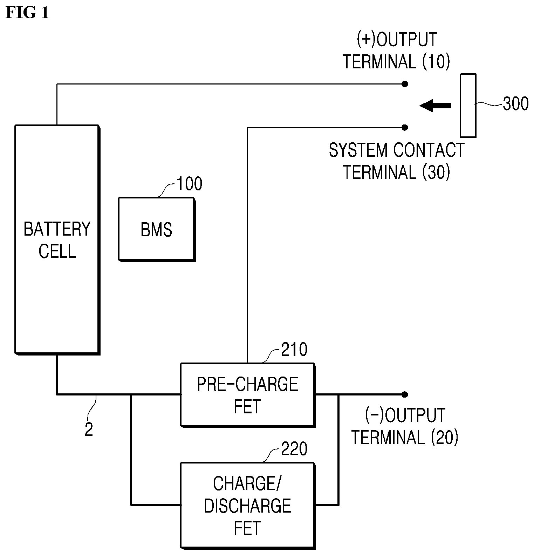

FIG. 1 is a view showing a battery pack according to an embodiment of the present invention.

Hereinafter, a battery pack according to an embodiment of the present invention will be described with reference to FIG. 1.

A battery pack according to an embodiment of the present invention may be configured to include a (+) output terminal 10 of the battery pack, a (-) output terminal 20 of the battery pack, a (-) line 2 connecting the (-) output terminal 20 and the (-) terminal of a battery cell constituting the battery pack, a pre-charge FET 210 provided on the (-) line 2, a system contact terminal 30 that checks whether an external system is connected, a Battery Management System (BMS) 100 and, a charge/discharge FET 220 that charges or discharges the battery pack under the control of the BMS 100.

Specifically, in relation to a battery pack according to an embodiment of the present invention, when the battery pack and external device are connected, due to a short member 300 provided in the external device, the (+) output terminal 10 of the battery pack and the system contact terminal 30 of the battery pack are electrically connected (shorted) so that the BMS 100 may wake up.

For example, the short member 300 provided in the external device is formed in a rod shape of a conductive material and in addition, one end of the short member 300 may contact the (+) output terminal 10 of the battery pack, and the other end may contact the system contact terminal 30 of the battery pack. Meanwhile, the rest of the short member 300 except for one end and the other end may be wrapped with an insulating member.

On the other hand, in relation to the battery pack according to an embodiment of the present invention, when the (+) output terminal 10 of the battery pack and the system contact terminal 30 are connected (shorted) through the short member 300 provided in the external device, the pre-charge FET 210 may be turned on.

And, when the pre-charge FET 210 is turned on, the voltage of the battery pack is supplied to the BMS 100 through the (+) output terminal 10 and the pre-charge FET 210 so that the BMS 100 may wake up.

In other words, when the (+) output terminal 10 of the battery pack and the system contact terminal 30 are connected (shorted) through the short member 300, the power path connected in the (+) output terminal 10 of the battery pack -> the short member 300 -> the system contact terminal 30 -> the pre-charge FET 210 -> the BMS 100 is formed so that it is possible to wake up the BMS 100 without a separate external power source.

Meanwhile, the external device may be any one of a mobile phone, a tablet computer, a notebook computer, a power tool, a wearable electronic device, and a power storage device, in which the battery pack is mounted.

Meanwhile, the BMS 100 may turn off the pre-charge FET 210 after the BMS 100 wakes up.

And, after the BMS 100 wakes up, the BMS 100 may check the voltage, current, and temperature of the battery, and when there is no abnormality in all of the voltage, current, and temperature, turn on the charge/discharge FET 220.

Accordingly, the battery pack may wake up without a separate power supply from the outside, and normally perform charging/discharging.

2. Battery pack according to another embodiment of present invention.

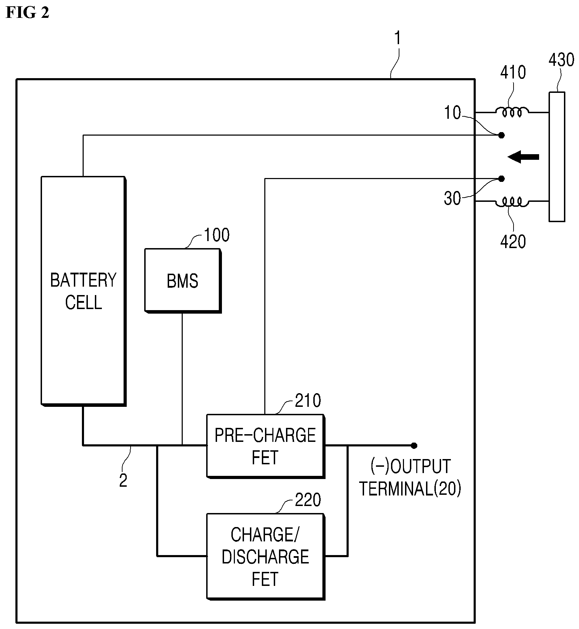

FIG. 2 is a view showing a battery pack according to another embodiment of the present invention.

Hereinafter, a battery pack according to another embodiment of the present invention will be described with reference to FIG. 2.

A battery pack according to another embodiment of the present invention includes all the configurations of the battery pack of the present invention described above, and includes a short member inside the battery pack.

Specifically, a battery pack according to an embodiment of the present invention may be configured to include a (+) output terminal 10 of the battery pack, a (-) output terminal 20 of the battery pack, a (-) line 2 connecting the (-) output terminal 20 and the (-) terminal of a battery cell constituting the battery pack, a pre-charge FET 210 provided on the (-) line 2, a system contact terminal 30 that checks whether an external system is connected, a Battery Management System (BMS) 100, a charge/discharge FET 220 that charges or discharges the battery pack under the control of the BMS 100, and a short part.

On the other hand, in the battery pack according to another embodiment of the present invention, other configurations and operations except for the short part are the same as those of the battery pack according to the embodiment of the present invention, so detailed descriptions are omitted.

Hereinafter, only the structure and operation of the short member of the battery pack according to another embodiment of the present invention will be described.

The short part according to another embodiment of the present invention may include a first support 410 located next to the (+) output terminal of the battery pack, a second support 420 located next to the system contact terminal, a short bar 430 supported by the first and second supports 410 and 420, and made of a conductive material.

The first and second supports 410 and 420 are formed of a material that can be contracted/expanded by an external pressing pressure, and when pressing pressure is applied from the outside, one end of the short bar 430 may contact the (+) output terminal 10 of the battery pack, and the other end of the short bar 430 may contact the system contact terminal 30.

For example, the first support 410 may be composed of a first spring, and one end of the first spring may be fixed around the battery pack case in which the (+) output terminal of the battery pack is formed, and the other end may be connected to one end of the short bar, and the second support 420 may be composed of a second spring, and one end of the second spring may be fixed around a battery pack case in which the system contact terminal is formed, and the other end may be connected to the other end of the short bar.

Meanwhile, in relation to the short bar, when a battery is connected to an external device and a pressing pressure is applied to the short bar 430 by the external device, the first and second members contract, and as a result, the short bar 430 contacts the (+) output terminal 10 and the system contact terminal 30 of the battery pack.

In other words, when the (+) output terminal 10 of the battery pack and the system contact terminal 30 are connected (shorted) through the short bar 430, the power path connected in the (+) output terminal 10 of the battery pack -> the short bar 430 -> the system contact terminal 30 -> the pre-charge FET 210 -> the BMS 100 is formed so that it is possible to wake up the BMS 100 without a separate external power source.

Meanwhile, the short bar 430 may be wrapped with an insulating member except for a portion corresponding to the (+) output terminal and a portion corresponding to the system contact terminal of the battery pack.

3. BMS wake-up method of battery pack according to embodiment of present invention.

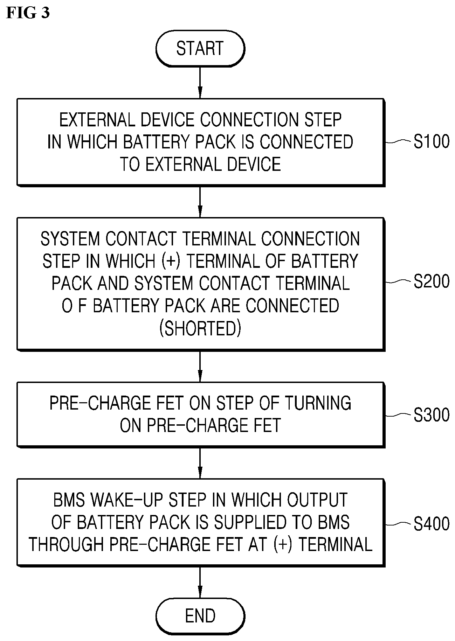

FIG. 3 is a flowchart illustrating a BMS wake-up method of a battery pack according to an embodiment of the present invention.

Hereinafter, a BMS wake-up method of a battery pack according to an embodiment of the present invention will be described with reference to FIG. 3.

The BMS wake-up method of a battery pack according to an embodiment of the present invention may be configured to include an external device connection step S100 in which the battery pack is connected to an external device, a system contact terminal connection step S200 in which the (+) terminal of the battery pack and the system contact terminal of the battery pack are connected (shorted) while the battery pack is connected to an external device, a pre-charge FET on step S300 in which the (+) terminal of the battery pack and the system contact terminal are connected to turn on the pre-charge FET in the system contact terminal connection step, and a BMS wake-up step S400 in which when the pre-charge FET of the battery pack is turned on, the output of the battery pack is supplied to the BMS through the pre-charge FET at the (+) terminal.

Specifically, the system contact terminal connection step S200 is a step in which the (+) terminal of the battery pack and the system contact terminal of the battery pack are connected by a short member.

For example, the short member is formed in a rod shape of a conductive material and in addition, one end of the short member may contact the (+) output terminal of the battery pack, and the other end may contact the system contact terminal of the battery pack. In addition, the rest of the part except for the one end and the other end may be wrapped with an insulating member.

In addition, when the (+) output terminal of the battery pack and the system contact terminal are connected (shorted) through the short member, the pre-charge FET on step may be performed.

And when the pre-charge FET on step S300 is performed, a BMS wake-up step in which a voltage of a battery pack is supplied to the BMS through the (+) output terminal and the pre-charge FET may be performed to wake up the BMS.

In other words, when the (+) output terminal of the battery pack and the system contact terminal are connected (shorted) through the short member, a power path connected in the battery pack's (+) output terminal -> the system contact terminal -> the pre-charge FET -> the BMS is formed, so that the BMS can wake up.

Meanwhile, after the BMS wakes up in the BMS wake-up step S400, the BMS may perform a pre-charge FET off step of turning off the pre-charge FET.

In addition, after the BMS wakes up in the BMS wake-up step S400, the BMS may perform a battery state measurement step of measuring voltage, current, and temperature of the battery pack, and when the voltage, current, and temperature of the battery pack measured in the battery state measurement step are within the normal range, perform a charge/discharge FET on step of turning on the charge/discharge FET.

On the other hand, although the technical idea of the present invention has been specifically described according to the above embodiment, it should be noted that the above embodiments are for the purpose of explanation and not limitation. In addition, those skilled in the art in the technical field of the present invention will be able to understand that various embodiments are possible within the scope of the claimed invention, which, however, is solely defined by the appended claims.

## Claims

1. A battery pack comprising a battery management system (100), BMS, configured to wake up when the battery pack is connected to an external system, the battery pack further comprising:
a positive output terminal (10) of the battery pack;
a negative output terminal (20) of the battery pack;
a negative line (2) connecting the negative output terminal (20) to a negative terminal of a battery cell constituting the battery pack;
a pre-charge FET (210) provided on the negative line (2) between the negative output terminal (20) and the negative terminal of the battery cell;
a system contact terminal (30) configured to check whether the external system is connected;
and
a charge/discharge FET (220) configured to charge or discharge the battery pack under a control of the BMS (100),
wherein the pre-charge FET (210) and the charge/discharge FET (220) are connected in parallel;
wherein the system contact terminal (30) is connected to the pre-charge FET (20) and;
wherein the battery pack is configured such that, when it is connected to the external device, the positive output terminal (10) of the battery pack and the system contact terminal (30) of the battery pack become electrically connected due to a short member (300) provided in the external device, wherein the pre-charge FET (210) is configured to be turned on when this occurs, thereby the voltage of the battery pack is supplied to the BMS (100) through the positive output terminal (10) and the pre-charge FET (210) and the BMS (100) wakes up.

2. The battery pack of claim 1, wherein after the BMS (100) wakes up, the BMS (100) turns off the pre-charge FET (210).

3. The battery pack of claim 1, wherein after the BMS (100) wakes up, the BMS (100) is configured to check voltage, current, and temperature of the battery, and to turn on the charge/discharge FET (220) when all of the voltage, current, and temperature are not abnormal.

4. The battery pack of claim 1, wherein battery pack is configured to be connected to the external device selected from any one of a mobile phone, a tablet computer, a notebook computer, a power tool, a wearable electronic device, and a power storage device, in which the battery pack is configured to be mounted.

5. A method of waking up a battery management system (100), BMS, of a battery pack, the method comprising:
an external device connection step in which the battery pack is connected to an external device;
a system contact terminal (30) connection step in which a positive terminal (10) of the battery pack and a system contact terminal (30) of the battery pack are shorted, while the battery pack is connected to the external device;
a pre-charge FET on step in which the positive terminal (10) of the battery pack and the system contact terminal (30) are connected in the system contact terminal connection step to turn on a pre-charge FET (210); and
a BMS wake-up step in which when the pre-charge FET (210) of the battery pack is turned on, an output of the battery pack is supplied to the BMS (100) through the pre-charge FET (210) at the positive terminal (10) to wake up the BMS (100),
wherein in the system contact terminal connection step, the positive terminal (10) of the battery pack and the system contact terminal (30) of the battery pack are connected by a short member (300) provided in the external device,
thereby forming a power path between the positive output terminal (10) of the battery pack and the pre-charge FET (210) through the short member (300).

6. The method of claim 5, wherein after the BMS (100) wakes up in the BMS wake-up step, the BMS (100) performs a pre-charge FET off step of turning off the pre-charge FET (210).

7. The method of claim 5,
wherein after the BMS wakes up in the BMS wake-up step,
the BMS (100) performs a battery state measurement step of measuring voltage, current, and temperature of the battery pack,
so that when the voltage, current, and temperature of the battery pack measured in the battery state measurement step are within a normal range, the charge/discharge FET on step of turning on the charge/discharge FET (220) is performed.

## Patentansprüche

1. Batteriepack, umfassend
ein Batteriemanagementsystem (100), BMS, das so konfiguriert ist, dass es sich aktiviert, wenn das Batteriepack mit einem externen System verbunden wird, wobei das Batteriepack ferner umfasst:
einen positiven Ausgangsanschluss (10) des Batteriepacks;
einen negativen Ausgangsanschluss (20) des Batteriepacks;
eine negative Leitung (2), die den negativen Ausgangsanschluss (20) mit einem negativen Anschluss einer das Batteriepack bildenden Batteriezelle verbindet;
einen Vorlade-FET (210), der an der negativen Leitung (2) zwischen dem negativen Ausgangsanschluss (20) und dem negativen Anschluss der Batteriezelle vorgesehen ist;
einen Systemkontaktanschluss (30), der so konfiguriert ist, dass er prüft, ob das externe System verbunden ist; und
einen Lade-/Entlade-FET (220), der so konfiguriert ist, dass er das Batteriepack unter einer Steuerung des BMS (100) lädt oder entlädt,
wobei der Vorlade-FET (210) und der Lade-/Entlade-FET (220) parallel geschaltet sind;
wobei der Systemkontaktanschluss (30) mit dem Vorlade-FET (20) verbunden ist; und
wobei das Batteriepack so konfiguriert ist, dass, wenn es mit dem externen Gerät verbunden ist, der positive Ausgangsanschluss (10) des Batteriepacks und der Systemkontaktanschluss (30) des Batteriepacks aufgrund eines in dem externen Gerät vorgesehenen Kurzschlusselements (300) elektrisch verbunden werden, wobei der Vorlade-FET (210) so konfiguriert ist, dass er eingeschaltet wird, wenn dies eintritt, wodurch die Spannung des Batteriepacks dem BMS (100) durch den positiven Ausgangsanschluss (10) und den Vorlade-FET (210) zugeführt wird und das BMS (100) sich aktiviert.

2. Batteriepack nach Anspruch 1, wobei nach dem Aktivieren des BMS (100) das BMS (100) den Vorlade-FET (210) ausschaltet.

3. Batteriepack nach Anspruch 1, wobei nach dem Aktivieren des BMS (100) das BMS (100) so konfiguriert ist, dass es Spannung, Strom und Temperatur der Batterie prüft und den Lade-/Entlade-FET (220) einschaltet, wenn alle von Spannung, Strom und Temperatur nicht abnormal sind.

4. Batteriepack nach Anspruch 1, wobei das Batteriepack so konfiguriert ist, dass es mit dem externen Gerät verbunden wird, das aus einem beliebigen von einem Mobiltelefon, einem Tablet-Computer, einem Notebook-Computer, einem Elektrowerkzeug, einem tragbaren elektronischen Gerät und einem Energiespeichergerät ausgewählt ist, in dem das Batteriepack konfiguriert ist, um montiert zu werden.

5. Verfahren zum Aktivieren eines Batteriemanagementsystems (100), BMS, eines Batteriepacks, wobei das Verfahren umfasst:
einen Schritt des Verbindens mit einem externen Gerät, bei dem das Batteriepack mit einem externen Gerät verbunden wird;
einen Schritt des Verbindens eines Systemkontaktanschlusses (30), bei dem ein positiver Anschluss (10) des Batteriepacks und ein Systemkontaktanschluss (30) des Batteriepacks kurzgeschlossen werden, während das Batteriepack mit dem externen Gerät verbunden ist;
einen Vorlade-FET-Einschaltschritt, bei dem der positive Anschluss (10) des Batteriepacks und der Systemkontaktanschluss (30) im Schritt des Verbindens des Systemkontaktanschlusses verbunden werden, um einen Vorlade-FET (210) einzuschalten; und
einen BMS-Aktivierungsschritt, bei dem, wenn der Vorlade-FET (210) des Batteriepacks eingeschaltet wird, ein Ausgang des Batteriepacks dem BMS (100) durch den Vorlade-FET (210) am positiven Anschluss (10) zugeführt wird, um das BMS (100) zu aktivieren,
wobei im Schritt des Verbindens des Systemkontaktanschlusses der positive Anschluss (10) des Batteriepacks und der Systemkontaktanschluss (30) des Batteriepacks durch ein in dem externen Gerät vorgesehenes Kurzschlusselement (300) verbunden werden, und
wodurch ein Strompfad zwischen dem positiven Ausgangsanschluss (10) des Batteriepacks und dem Vorlade-FET (210) durch das Kurzschlusselement (300) gebildet wird.

6. Verfahren nach Anspruch 5, wobei nach dem Aktivieren des BMS (100) im BMS-Aktivierungsschritt das BMS (100) einen Vorlade-FET-Ausschaltschritt des Ausschaltens des Vorlade-FET (210) durchführt.

7. Verfahren nach Anspruch 5, wobei nach dem Aktivieren des BMS im BMS-Aktivierungsschritt
das BMS (100) einen Batteriezustandsmessschritt des Messens von Spannung, Strom und Temperatur des Batteriepacks durchführt,
so dass, wenn die Spannung, der Strom und die Temperatur des Batteriepacks, die im Batteriezustandsmessschritt gemessen werden, innerhalb eines normalen Bereichs liegen, der Lade-/Entlade-FET-Einschaltschritt des Einschaltens des Lade-/Entlade-FET (220) durchgeführt wird.

## Revendications

1. Bloc-batterie comprenant un système de gestion de batterie (100), BMS, configuré pour se réveiller lorsque le bloc-batterie est connecté à un système externe, le bloc-batterie comprenant en outre :
une borne de sortie positive (10) du bloc-batterie ;
une borne de sortie négative (20) du bloc-batterie ;
une ligne négative (2) connectant la borne de sortie négative (20) à une borne négative d'une cellule de batterie constituant le bloc-batterie ;
un FET de précharge (210) prévu sur la ligne négative (2) entre la borne de sortie négative (20) et la borne négative de la cellule de batterie ;
une borne de contact de système (30) configurée pour vérifier si le système externe est connecté ; et
un FET de charge/décharge (220) configuré pour charger ou décharger le bloc-batterie sous le contrôle du BMS (100),
dans lequel le FET de précharge (210) et le FET de charge/décharge (220) sont connectés en parallèle ;
dans lequel la borne de contact de système (30) est connectée au FET de précharge (20) et ;
dans lequel le bloc-batterie est configuré de telle sorte que, lorsqu'il est connecté au dispositif externe, la borne de sortie positive (10) du bloc-batterie et la borne de contact de système (30) du bloc-batterie deviennent connectées électriquement en raison d'un élément de court-circuit (300) prévu dans le dispositif externe, dans lequel le FET de précharge (210) est configuré pour être activé lorsque cela se produit, de sorte que la tension du bloc-batterie est fournie au BMS (100) à travers la borne de sortie positive (10) et le FET de précharge (210) et le BMS (100) se réveille.

2. Bloc-batterie selon la revendication 1, dans lequel, après le réveil du BMS (100), le BMS (100) désactive le FET de précharge (210).

3. Bloc-batterie selon la revendication 1, dans lequel, après le réveil du BMS (100), le BMS (100) est configuré pour vérifier la tension, le courant et la température de la batterie, et pour activer le FET de charge/décharge (220) lorsque la tension, le courant et la température ne sont pas anormaux.

4. Bloc-batterie selon la revendication 1, dans lequel le bloc-batterie est configuré pour être connecté au dispositif externe choisi parmi l'un quelconque d'un téléphone mobile, d'une tablette tactile, d'un ordinateur portable, d'un outil électrique, d'un dispositif électronique portable, et d'un dispositif de stockage d'énergie, dans lequel le bloc-batterie est configuré pour être monté.

5. Procédé de réveil d'un système de gestion de batterie (100), BMS, d'un bloc-batterie, le procédé comprenant :
une étape de connexion de dispositif externe dans laquelle le bloc-batterie est connecté à un dispositif externe ;
une étape de connexion de borne de contact de système (30) dans laquelle une borne positive (10) du bloc-batterie et une borne de contact de système (30) du bloc-batterie sont court-circuitées, tandis que le bloc-batterie est connecté au dispositif externe ;
une étape d'activation de FET de précharge dans laquelle la borne positive (10) du bloc-batterie et la borne de contact de système (30) sont connectées dans l'étape de connexion de borne de contact de système pour activer un FET de précharge (210) ; et
une étape de réveil de BMS dans laquelle, lorsque le FET de précharge (210) du bloc-batterie est activé, une sortie du bloc-batterie est fournie au BMS (100) à travers le FET de précharge (210) au niveau de la borne positive (10) pour réveiller le BMS (100),
dans lequel, dans l'étape de connexion de borne de contact de système, la borne positive (10) du bloc-batterie et la borne de contact de système (30) du bloc-batterie sont connectées par un élément de court-circuit (300) prévu dans le dispositif externe,
formant ainsi un chemin de puissance entre la borne de sortie positive (10) du bloc-batterie et le FET de précharge (210) à travers l'élément de court-circuit (300).

6. Procédé selon la revendication 5, dans lequel, après le réveil du BMS (100) dans l'étape de réveil de BMS, le BMS (100) effectue une étape de désactivation de FET de précharge consistant à désactiver le FET de précharge (210).

7. Procédé selon la revendication 5, dans lequel, après le réveil du BMS dans l'étape de réveil de BMS,
le BMS (100) effectue une étape de mesure d'état de batterie consistant à mesurer la tension, le courant et la température du bloc-batterie,
de sorte que, lorsque la tension, le courant et la température du bloc-batterie mesurés dans l'étape de mesure d'état de batterie sont dans une plage normale, l'étape d'activation de FET de charge/décharge consistant à activer le FET de charge/décharge (220) est effectuée.
